# EUROPÄISCHE PATENTSCHRIFT

(11) **EP 0 446 244 B1**
(45) Veröffentlichungstag und Bekanntmachung des Hinweises auf die Patenterteilung: **20.04.1994**
(21) Anmeldenummer: 89913002.5
(22) Anmeldetag: 15.11.1989
(51) Int. Cl.: F16H 61/14

(54) **STEUEREINRICHTUNG FÜR EINE REIBSCHLÜSSIGE ÜBERBRÜCKUNGSKUPPLUNG EINES HYDRODYNAMISCHEN DREHMOMENTWANDLERS**
CONTROL DEVICE FOR A FRICTIONALLY ENGAGING CLUTCH FOR A HYDRODYNAMIC TORQUE CONVERTER
DISPOSITIF DE COMMANDE POUR L'EMBRAYAGE DE PONTAGE A ENTRAINEMENT PAR FRICTION D'UN CONVERTISSEUR DE COUPLE HYDRODYNAMIQUE

(30) Priorität: 01.12.1988 DE 3840427
(43) Veröffentlichungstag der Anmeldung: 18.09.1991
(73) Patentinhaber: ZF FRIEDRICHSHAFEN Aktiengesellschaft, 88038 Friedrichshafen (DE)
(72) Erfinder: GIERER, Georg, D-7993 Kressbronn (DE)
(86) Internationale Anmeldenummer: EP8901367
(87) Internationale Veröffentlichungsnummer: WO9006458

(56) Entgegenhaltungen:
- EP-A- 0 043 545
- DE-A- 3 130 871
- DE-A- 3 447 651
- FR-A- 2 499 000
- GB-A- 2 058 962

## Beschreibung

Die Erfindung bezieht sich auf eine Steuereinrichtung für eine reibschlüssige Überbrückungskupplung eines hydrodynamischen Drehmomentwandlers entsprechen den im Oberbegriff von Anspruch 1 aufgeführten Merkmalen.

Eine Steuereinrichtung der vorgenannten Gattung ist aus der DE-A 31 30 871 bekannt. Aus dem Hauptdrucksystem der Steuereinrichtung wird über Regelventile den Betätigungsräumen der Überbrückungskupplung wahlweise Druckmittel zugeführt, so daß sich die Überbrückungskupplung in einem eingerückten, ausgerückten oder schlupfenden Zustand befindet. An einen Rücklauf des einen Regelventils, der wahlweise mit einem der beiden Betätigungsräume verbindbar ist, schließt sich die Schmiermittelleitung an, die über den Ölkühler zum Schmiersystem des Getriebes führt. Bei eingerückter Überbrückungskupplung gelangt nur in der Anfangsphase eine geringe Schmiermittelmenge aus dem zur Ausrückung dienenden Betätigungraum über den Kühler zu den Schmierstellen des Getriebes. Ein völliger Zusammenbruch des Schmiermitteldruckes, der zu Beschädigungen des Getriebes führen kann, tritt dann ein, wenn sich der Steuerschieber des Regelventils in seiner Mittelstellung befindet, so daß weder aus dem Wandlerinnenraum, noch aus der Hauptdruckleitung Schmiermittel über den Kühler zu den Schmierstellen gelangen kann.

Der Erfindung liegt daher die Aufgabe zugrunde, diese Schwierigkeiten zu vermeiden und eine Steuereinrichtung der genannten Gattung derart weiterzubilden, daß stets eine ausreichende Schmiermittelmenge über den Kühler zu den Schmierstellen des Getriebes gelangt.

Diese Aufgabe wird durch die im Anspruch 1 aufgeführten Merkmale gelöst. Dabei mündet vor dem Kühler in die Schmiermittelleitung ein Zweig der Hauptdruckleitung ein. Wird nunmehr aufgrund der Stellungen der Regelventile die am Kühler und an den Schmierstellen anstehende Schmiermittelmenge verringert, so speist dieser Zweig der Hauptdruckleitung in die Schmiermittelleitung die fehlende Menge ein. Entsprechende Zustände können bei eingerückter oder schlupfgeregelter Überbrückungskupplung eintreten, wenn an dem Rücklauf des zum Einrücken der Überbrückungskupplung dienenden Betätigungsraumes kein Druckmittel abgeführt wird.

An der Verbindungsstelle von Schmiermittelleitung und dem Zweig der Hauptdruckleitung ist weiterhin ein Druckregelventil angeordnet sein, das mit dem Druck der Schmiermittelleitung vorgesteuert ist. Nimmt der Druck in der Schmiermittelleitung zu, so reduziert dieses Druckregelventil die Einspeisung aus dem Zweig der Hauptdruckleitung in entsprechender Weise. Somit kann der Druck in der Schmiermittelleitung weitgehend konstant gehalten werden.

Dem Anspruch 2 zufolge kann in dem Zweig der Hauptdruckleitung und/oder ausgangsseitig des Druckregelventil ein Drosselventil angeordnet sein. Diese einzeln oder paarweise vorhandenen Drosselventile sollen den Druckmittelstrom aus der Hauptdruckleitung etwas reduzieren, da bei geregelter oder geschlossener Überbrückungskupplung ein geringerer Druckmittelfluß über den Kühler erforderlich ist als im reinen Wandlerbetrieb, bei dem sich das Druckmittel stark erwärmt.

Weiterhin soll nach Anspruch 3 bei einer Steuereinrichtung mit einem elektromagnetischen, von einem Steuergerät beherrschten Drucksteuerventil, das den Druck in einer Vorsteuerleitung der Regelventile einstellt, jedem Betätigungsraum ein den Betätigungsdruck einstellendes Regelventil zugeordnet sein, wobei beide Regelventile über einen, von dem Steuergerät mittels des Drucksteuerventils eingestellten Vorsteuerdrucks beaufschlagbar sind. Über diese beiden mechanisch voneinander getrennt wirkenden Regelventile lassen sich zum einen präzise aufeinander abgestimmt die Betätigungsräume mit Druck beaufschlagen oder in einen drucklosen Zustand steuern, und es läßt sich der Druckmittelablauf zum Rücklauf hin und folglich zur Schmiermittelleitung und zum Kühler steuern.

Weiterhin können gemäß Anspruch 4 in einer ersten Endstellung der beiden Regelventile, bei geringem Vorsteuerdruck bzw. Vorsteuerdruck gleich Null, der zum Ausrücken dienende Betätigungsraum über das erste Regelventil mit dem Hauptdrucksystem verbunden und der andere Betätigungsraum über beide Regelventile zum Rücklauf hin geöffnet sein. In diesem Zustand, der durch beide Regelventile eingestellt ist, fließt das Druckmittel aus dem zum Einrücken der Überbrückungskupplung dienenden Betätigungsraum in die Schmiermittelleitung, wobei der Zweig der Hauptdruckleitung über das Druckregelventil bei einem Druckabfall eine fehlende Schmiermittelmenge einspeist. Weiterhin können nach Anspruch 5 in einer zweiten Endstellung der beiden Regelventile, bei maximalem Vorsteuerdruck, der zum Einrücken dienende Betätigungsraum über das zweite Regelventil mit dem Hauptdrucksystem verbunden und der zum Ausrücken dienende Betätigungsraum über das erste Regelventil zu einem Ablauf hin geöffnet sein. In dieser Endstellung wird das Druckmittel aus dem zum Ausrücken der Überbrückungskupplung dienenden Betätigungsraum drucklos in den Tank abgeführt, während allein aus der Hauptdruckleitung über das Druckregelventil Schmiermittel in die Schmiermittelleitung und somit in den Kühler gelangt. Auf diese Weise besteht auch in dieser Schaltstellung der Steuereinrichtung eine Schmiermittelversorgung der Schmierstellen des Getriebes bei ausreichender Kühlung des verwendeten Mediums. Auch in den Zwischenstellungen der Steuereinrichtung, in denen an der Überbrückungskupplung ein Schlupfzustand eingehalten wird, sind derartige Bedingungen erfüllt.

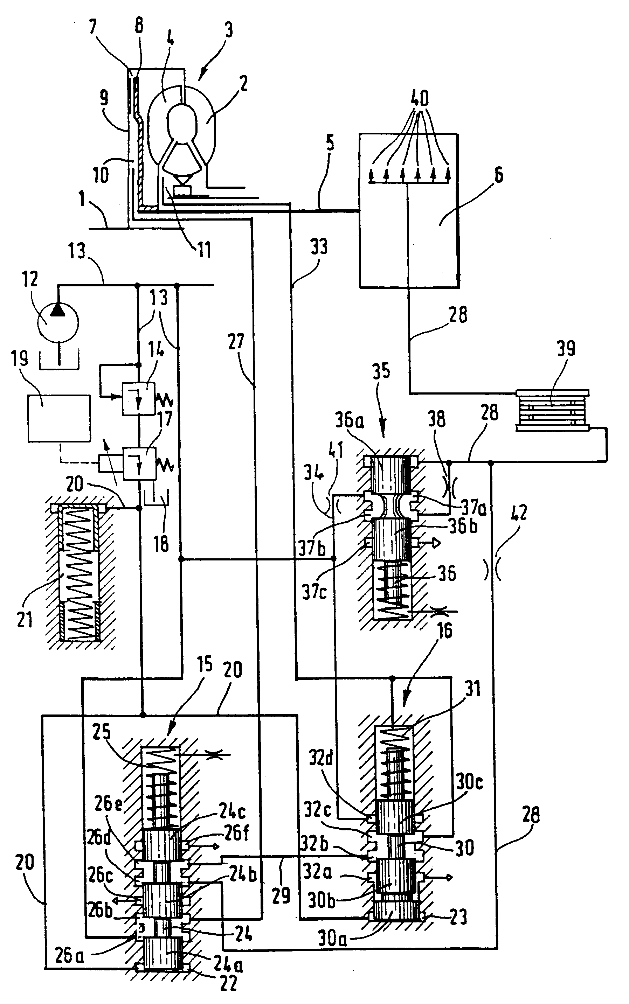

Zur weiteren Erläuterung der Erfindung wird auf die Zeichnung verwiesen, in der ein Ausführungsbeispiel vereinfacht dargestellt ist.

In der Fig. ist mit 1 eine Kurbelwelle einer nicht näher dargestellten Brennkraftmaschine bezeichnet, die ein Pumpenrad 2 eines hydrodynamischen Drehmomentwandlers 3 antreibt. Der hydrodynamische Drehmomentwandler 3 weist außerdem ein Turbinenrad 4 auf, das mit einer Eingangswelle 5 eines schematisch dargestellten Zahnräderwechselgetriebes verbunden ist. Eine zwischen Pumpenrad 2 und Turbinenrad 4 angeordnete Überbrückungskupplung 7 überträgt im eingerückten Zustand das gesamte Antriebsdrehmoment von der Kurbelwelle 1 zur Eingangswelle 5 unter Umgehung des Drehmomentwandlers 3. Zu diesem Zweck weist die Überbrückungskupplung 7 ein axial verlagerbares als Reibscheibe ausgebildetes Kuppelelement 8 auf, das reibschlüssig mit einem Abschnitt eines Pumpengehäuses 9 zusammenwirkt. Die Verstellung des Kuppelelements 8 in seine ein- bzw. ausgerückte Stellung erfolgt mittels eines ersten und zweiten Betätigungsraumes 10 und 11, die jeweils stirnseitig des axial verlagerbaren Kuppelelements 8 angeordnet sind.

Eine Hydraulikpumpe 12 fördert Druckmittel in eine Hauptdruckleitung 13, an welche ein Druckreduzierventil 14, ein erstes Regelventil 15 und ein zweites Regelventil 16 angeschlossen sind. Weiterhin führt diese Hauptdruckleitung 13 zu einem nicht dargestellten Steuersystem des Zahnräderwechselgetriebes 6. Dem Druckreduzierventil 14 ist ein Drucksteuerventil 17 nachgeordnet, das eine Ablaufleitung 18 zum Tank stromproportional auf- oder zusteuert. Dieses Drucksteuerventil 17 ist betätigt von einem Steuergerät 19 und beherrscht den Druck in seiner ausgangsseitigen Vorsteuerleitung 20.

Dem Steuergerät können in bekannter Weise bestimmte Betriebsparameter der Brennkraftmaschine oder des Getriebes zugeführt werden, woraufhin das Steuergerät 19 das Drucksteuerventil 17 mit einem entsprechenden Steuerstrom versorgt, der eine proportionale Verstellung dieses Drucksteuerventils 17 bewirkt. Die Vorsteuerleitung 20 ist angeschlossen an ein Dämpfungsglied 21 sowie einen stirnseitigen Vorsteuerraum 22 des ersten Regelventils 15 und an einen stirnseitigen Vorsteuerraum 23 des zweiten Regelventils 16. Das erste Regelventil 15 weist einen Steuerschieber 24 auf, der wiederum mit Steuerkolben 24a, b und c versehen ist. Dem Vorsteuerraum 22 gegenüberliegend belastet eine Feder 25 den Steuerschieber 24. Im Innern des Regelventils 15 wirken mit den Steuerkolben 24a bis c Ringräume 26a bis 26f zusammen. An den Ringraum 26a ist die Hauptdruckleitung 13 angeschlossen, während von dem Ringraum 26b eine erste Betätigungsleitung zum ersten Betätigungsraum 10 der Überbrückungskupplung 7 führt. Die Ringräume 26c und 26f dienen zur drucklosen Entleerung in den Tank, während Ringraum 26d mit einer Schmiermittelleitung 28 und Ringraum 26e mit einer zum zweiten Regelventil 16 führenden Verbindungsleitung 29 verbunden sind.

Das zweite Regelventil 16 hat einen Steuerschieber 30 mit Steuerkolben 30a bis 30c, der an seinem dem Vorsteuerraum 23 gegenüberliegenden Ende mittels einer Feder 31 belastet ist. Weiterhin weist das zweite Regelventil 16 in seinem Inneren Ringräume 32a bis 32d auf. Ein Ringraum 32a dient zur drucklosen Ableitung des Druckmediums in den Tank. Über Ringraum 32b ist das zweite Regelventil 16 an die Verbindungsleitung 29 angeschlossen, während Ringraum 32c über eine zweite Betätigungsleitung 33 mit dem zweiten Betätigungsraum 11 der Überbrückungskupplung 7 in Verbindung steht. Angeschlossen an den Betätigungsraum 32d ist die Hauptdruckleitung 13.

Von der Hauptdruckleitung 13 führt ein Zweig 34 zu einem Druckregelventil 35, welches über den in der Schmiermittelleitung 28 herrschenden Druck vorgesteuert ist. Das Druckregelventil 35 hat einen federbelasteten Steuerschieber 36 mit Steuerkolben 36a und b sowie Ringräume 37a bis c. Ein Ringraum 37a ist verbunden mit dem Zweig 34 der Hauptdruckleitung 13, während am Ringraum 37b ein mit einem Drosselventil 38 versehener Abschnitt der Schmiermittelleitung 28 verbunden ist. Ringraum 37c führt drucklos zum Tank.

Die Schmiermittelleitung 28 nimmt einen Kühler 39 auf, der als Öl-/Wasser-Wärmetauscher oder Öl-/Luft-Wärmetauscher ausgebildet sein kann. Anschließend führt die Schmiermittelleitung zu Schmierstellen 40 des Zahnräderwechselgetriebes 6, die im einzelnen nicht dargestellt sind. Im Zweig 34 der Hauptdruckleitung 13 ist ein Drosselventil 41 angeordnet, während die Schmiermittelleitung 28 in einem Bereich vor der Einspeisung über das Druckregelventil 35 eine Drossel 42 aufweist.

Die Funktion der dargestellten Steuereinrichtung ist folgende:
In der Darstellung befinden sich die beiden Regelventile 15 und 16 in einer Stellung, in welcher sie die Überbrückungskupplung 7 in ihre ausgerückte Stellung betätigen, d. h., das gesamte Antriebsmoment der Kurbelwelle 1 fließt über den hydrodynamischen Drehmomentwandler 3. Zu diesem Zweck hat das Steuergerät 19 aufgrund ihm zugeführter Betriebsparameter von Brennkraftmaschine und/oder Zahnräderwechselgetriebe das Drucksteuerventil 17 derart verstellt, daß der Druck in der Vorsteuerleitung 20 einen Minimalwert angenommen hat, so daß sich die beiden Regelventile 15 und 16 in ihrer unteren Stellung befinden. Aus der Hauptdruckleitung 13 gelangt über die miteinander verbundenen Ringräume 26a und 26b Druckmittel in die erste Betätigungsleitung 27 und somit in den ersten Betätigungsraum 10. Ein Druckmittelstrom aus dem zweiten Betätigungsraum 11 fließt über die zweite Betätigungsleitung 33, über die zueinander geöffneten Ringräume 32c und 32b die Verbindungsleitung 29, zueinander geöffnete Ringräume 26e und 26d des ersten Regelventils 15 und die Schmiermittelleitung 28 sowie den Kühler 39 zu den Schmierstellen 40. Der vor dem Kühler 39 in der Schmiermittelleitung 28 herrschende Druck wird vom Druckregelventil 35 überwacht, und es wird, sofern dieser Druck einen Grenzwert unterschreitet, eine Schmiermittelmenge aus dem Zweig 34 über die Ringräume 37a und 37b in die Schmiermittelleitung eingespeist. Überschreitet der Druck in der Schmiermittelleitung einen oberen Grenzwert, so steuert das Druckregelventil 35 über den Ringraum 37c eine überschüssige Druckmittelmenge ab. Auf diese Weise kann für eine konstante den Kühler 39 durchströmende und den Schmierstellen 40 zugeführte Schmiermittelmenge gesorgt werden. Zur Überführung der Überbrückungskupplung 7 in einen Schlupfzustand, in welchem die Überbrückungskupplung 7 einen Teil des Antriebsdrehmoments überträgt, oder in einen eingekuppelten Zustand, in welchem die Überbrückungskupplung 7 für eine reibschlüssige Verbindung von Kurbelwelle 1 und Eingangswelle 5 sorgt, verschließt das stromproportional wirkende Drucksteuerventil 17 aufgrund des ihm vom Steuergerät 19 zugeführten Stroms die Ablaufleitung 18 in entsprechender Weise. Dadurch steigt der Druck in der Vorsteuerleitung 20 und folglich auch in den Vorsteuerräumen 22 und 23 der beiden Regelventile 15 und 16 an. In einer Endstellung der beiden Regelventile 15 und 16 ist über den Steuerschieber 24 des ersten Regelventils 15 der erste Betätigungsraum 10 über seine erste Betätigungsleitung 27 und Ringräume 26b und 26c zum Tank hin drucklos geöffnet. Am Regelventil 16 nimmt der Steuerschieber 30 eine Stellung ein, in welcher sein Steuerkolben 30c eine Verbindung von Hauptdruckleitung 13 und zweiter Betätigungsleitung 33 herstellt. Das Kuppelelement 8 wird somit über den druckbeaufschlagten zweiten Betätigungsraum 11 in seine eingerückte Stellung verschoben. In diesem Zustand ist am ersten Regelventil 15 die Schmiermittelleitung 28 zwar über den Steuerkolben 24b abgesperrt, über den Zweig 34 der Hauptdruckleitung 13 wird aber je nach der Stellung des Druckregelventils 35 mehr oder weniger Druckmittel in die Schmiermittelleitung 28 eingespeist, das über den Kühler 39 fließend zu den Schmierstellen 40 des Zahnräderwechselgetriebes 6 gelangt. Somit ist auch in dieser Stellung ein einwandfreier Schmiermittelfluß zu den Schmierstellen 40 gewährleistet. Die beiden Drosselventile 38 und 41 reduzieren in dieser Stellung der Steuereinrichtung den Schmiermittelfluß aus der Hauptdruckleitung, da andernfalls aufgrund des Druckniveaus in der Hauptdruckleitung unerwünschte Schaltvorgänge am Druckregelventil 35 ausgelöst würden. Selbstverständlich wird die Überbrückungskupplung 7 mittels der Steuereinrichtung nicht nur in den ein- oder ausgerückten Zustand mit den Endstellungen der beiden Regelventile 15 und 16 verstellt. Die Regelventile 15 und 16 können über das Drucksteuerventil 17 auch in Stellungen bewegt werden, die zu einem Schlupfzustand der Überbrückungskupplung 7 führen. In diesem Schlupfzustand wird dann ebenfalls mittels der erfindungsgemäßen Einrichtung für eine ausreichende Schmiermittelzufuhr zu den Schmierstellen 40 des Zahnräderwechselgetriebes 6 und zu einer ausreichenden Kühlung des Druckmediums über den Kühler 39 gesorgt.

### Bezugszeichen

- 1: Kurbelwelle
- 2: Pumpenrad von 3
- 3: hydrodynamischer Drehmomentwandler
- 4: Turbinenrad von 3
- 5: Eingangswelle
- 6: Zahnräderwechselgetriebe
- 7: Überbrückungskupplung
- 8: Kuppelelement
- 9: Pumpengehäuse
- 10: erster Betätigungsraum
- 11: zweiter Betätigungsraum
- 12: Hydraulikpumpe
- 13: Hauptdruckleitung
- 14: Druckreduzierventil
- 15: erstes Regelventil
- 16: zweites Regelventil
- 17: Drucksteuerventil
- 18: Ablaufleitung
- 19: Steuergerät
- 20: Vorsteuerleitung
- 21: Dämpfungsglied
- 22: Vorsteuerraum von 15
- 23: Vorsteuerraum von 16
- 24: Steuerschieber von 22
- 24a - c: Steuerkolben von 22
- 25: Feder von 22
- 26a - f: Ringräume von 22
- 27: erste Betätigungsleitung
- 28: Schmiermittelleitung
- 29: Verbindungsleitung
- 30: Steuerschieber von 16
- 30a - c: Steuerkolben von 16
- 31: Feder von 16
- 32a - d: Ringräume von 16
- 33: zweite Betätigungsleitung
- 34: Zweig von 13
- 35: Druckregelventil
- 36: Steuerschieber von 35
- 36a + b: Steuerkolben von 35
- 37a - c: Ringräume von 35
- 38: Drosselventil
- 39: Kühler
- 40: Schmierstellen von 6
- 41: Drosselventil
- 42: Drossel

## Patentansprüche

1. Steuereinrichtung für eine reibschlüssige Überbrückungskupplung (7) eines hydrodynamischen Drehmomentwandlers (3), deren axial verlagerbares Kuppelelement (8) zum Ein- und Ausrücken der Überbrückungskupplung (7) an seinen Stirnseiten aus Betätigungsräumen (10, 11) druckbeaufschlagbar ist, wobei die Betätigungsräume (10, 11) über Regelventile (15, 16) an ein Hauptdrucksystem angeschlossen sind, mit einer an ein Schmiersystem (Schmierstellen 40) eines dem Drehmomentwandler (3) nachgeordneten Zahnräderwechselgetriebes (6) angeschlossenen Schmiermittelleitung (28), die mit einem gesteuerten Rücklauf (Rinaraum 26d) des zum Einrücken der Überbrückungskupplung (7) dienenden Betätigungsraumes (11) verbunden ist und einen Kühler (39) aufnimmt, dadurch **gekennzeichnet,** daß vor dem Kühler (39) in die Schmiermittelleitung (28) ein Zweig (34) der Hauptdruckleitung (13) einmündet und daß an der Verbindungsstelle von Schmiermittelleitung (28) und Zweig (34) der Hauptdruckleitung (13) ein Druckregelventil (35) angeordnet ist, das mit dem Druck der Schmiermittelleitung (28) vorgesteuert ist.

2. Steuereinrichtung nach Anspruch 1, dadurch **gekennzeichnet,** daß in dem Zweig (34) der Hauptdruckleitung (13) und/oder ausgangsseitig des Druckregelventils (35) ein Drosselventil (38, 41) angeordnet ist.

3. Steuereinrichtung nach Anspruch 1, dadurch **gekennzeichnet,** daß jedem Betätigungsraum (10, 11) ein den Betätigungsdruck einstellendes Regelventil (15, 16) zugeordnet ist, wobei beide Regelventile (15, 16) über einen von einem elektrischen Drucksteuerventil (17) einstellbaren Vorsteuerdruck beaufschlagbar sind.

4. Steuereinrichtung nach Anspruch 3, dadurch **gekennzeichnet,** daß in einer ersten Endstellung der beiden Regelventile (15, 16) bei geringem Vorsteuerdruck bzw. Vorsteuerdruck gleich Null, der zum Ausrücken dienende Betätigungsraum (10) über das erste Regelventil (15) mit dem Hauptdrucksystem (Hauptdruckleitung 13) verbunden und der andere Betätigungsraum (11) über beide Regelventile (15, 16) zum Rücklauf hin geöffnet sind.

5. Steuereinrichtung nach Anspruch 4, dadurch **gekennzeichnet,** daß in einer zweiten Endstellung der beiden Regelventile (15, 16), bei maximalem Vorsteuerdruck, der zum Einrücken dienende Betätigungsraum (11) über das zweite Regelventil (16) mit dem Hauptdrucksystem (Hauptdruckleitung 13) verbunden und der zum Ausrücken dienende Betätigungsraum (10) über das erste Regelventil (15) zu einem Ablauf (Ringraum 26c) hin geöffnet sind.

## Claims

1. Control device for a frictionally engaging bridging clutch (7) of a hydrodynamic torque converter (3), whose axially displaceable clutch element (8) can be acted upon on its end faces by pressure from actuating spaces (10, 11) for the engagement and disengagement of the bridging clutch (7), the actuating spaces (10, 11) being connected via control valves (15, 16) to a main pressure system, with a lubricant line (28), which is connected to a lubricating system (lubricating points 40) of a variable-gear transmission (6) arranged on the output side of the torque converter (3), is connected to a controlled return line (annular chamber 26d) of the actuating space (11) used for the engagement of the bridging clutch (7) and accommodates a cooler (39), characterised in that a branch (34) of the main pressure line (13) opens into the lubricant line (28) upstream of the cooler (39) and a pressure control valve (35), which is pilot-controlled by the pressure of the lubricant line (28), is arranged at the connection site of the lubricant line (28) and the branch (34) of the main pressure line (13).

2. Control device according to claim 1, characterised in that a throttle valve (38, 41) is arranged in the branch (34) of the main pressure line (13) and/or on the output side of the pressure control valve (35).

3. Control device according to claim 1, characterised in that a control valve (15, 16) adjusting the actuating pressure is associated with each actuating space (10, 11), both control valves (15, 16) being actuatable via a pilot control pressure adjustable by an electrical pressure control valve (17).

4. Control device according to claim 3, characterised in that in a first end position of the two control valves (15, 16), when the pilot control pressure is slight or equal to zero, the actuating space (10) used for disengagement is connected via the first control valve (15) to the main pressure system (main pressure line 13) and the other actuating space (11) is opened via both control valves (15, 16) to the return line.

5. Control device according to claim 4, characterised in that in a second end position of the two control valves (15, 16), when the pilot control pressure is at maximum, the actuating space (11) used for engagement is connected via the second control valve (16) to the main pressure system (main pressure line 13) and the actuating space (10) used for disengagement is opened via the first control valve (15) to an outlet (annular chamber 26c).

## Revendications

1. Dispositif de commande d'un embrayage de pontage à friction (7) d'un convertisseur hydrodynamique de couple (3) où un élément d'embrayage (8) à déplacement axial pour embrayer et débrayer l'embrayage de pontage (7) peut être actionné par une pression sur ses faces frontales par des chambres d' actionnement (10, 11) qui sont raccordées à un circuit principal de pression au moyen de soupapes de réglage (15, 16), le dispositif comportant un conduit de lubrifiant (28) raccordé à un système de lubrification (points de lubrification 40) d'une boîte de vitesses à engrenages (6) disposée à la suite du convertisseur de couple (3), et où le conduit de lubrifiant est raccordé à un retour commandé (chambre annulaire 26d) de la chambre d'actionnement (11) servant à embrayer l'embrayage de pontage (7) et comporte un organe de refroidissement (39), **caractérisé** en ce qu'un embranchement (34) du conduit principal de pression (13) débouche dans le conduit de lubrifiant (28) en amont de l'organe de refroidissement (39) et en ce qu'à la jonction entre le conduit de lubrifiant (28) et l'embranchement (34) du conduit principal de pression (13), il est prévu un régulateur de pression (35) qui est piloté par la pression du conduit de lubrifiant (28).

2. Dispositif selon la revendication 1, **caractérisé** en ce qu'un limiteur de débit (38, 41) est disposé dans l'embranchement (34) du conduit principal de pression (13) et/ou du côté de la sortie du régulateur de pression (35).

3. Dispositif selon la revendication 1, **caractérisé** en ce que chacune des chambres d' actionnement (10, 11) est commandée par une soupape de réglage (15, 16) qui règle la pression d'actionnement, les deux soupapes de réglage (15, 16) étant actionnées par une pression de pilotage qui est réglable au moyen d'une soupape électrique de commande de pression (17).

4. Dispositif selon la revendication 3, **caractérisé** en ce que, dans une première position de fin de course des deux soupapes de réglage (15, 16) à une pression de pilotage faible ou nulle, la chambre d'actionnement (10) servant à débrayer est raccordée au circuit principal de pression (conduit principal 13) à travers la première soupape de réglage (15) et l'autre chambre d'actionnement (11) est ouverte vers le retour à travers les deux soupapes de réglage (15, 16).

5. Dispositif selon la revendication 4, **caractérisé** en ce que, dans une seconde position de fin de course des deux soupapes de réglage (15, 16) à une pression de pilotage maximale, la chambre d' actionnement (11) servant à embrayer est raccordée au circuit principal de pression (conduit principal 13) à travers la seconde soupape de réglage (16) et la chambre d'actionnement (10) servant à débrayer est ouverte vers une décharge (chambre annulaire 26c) à travers la première soupape de réglage (15).
